# EUROPEAN PATENT APPLICATION

(11) **EP 4 651 403 A1**
(43) Date of publication of application: **19.11.2025**
(21) Application number: 23915304.2
(22) Date of filing: 10.01.2023
(51) Int. Cl.: H04B 17/391, G06N 20/00

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: ZHENG, Xufei, Dongguan, Guangdong 523860 (CN)
(74) Representative: Mewburn Ellis LLP
(86) International application number: PCT/CN2023/071739
(87) International publication number: WO 2024/148528

(57) **Abstract**

A communication method and a communication device are provided. The method includes the following. A first communication device determines whether first channel data is valid or invalid, where the first channel data is usable for training a first model when the first channel data is valid, and the first channel data is unusable for training the first model when the first channel data is invalid. Data used to train the first model is filtered data. The first channel data can be used to train the first model only when the first channel data is valid. It can be understood that for the training of the first model, the quality of valid channel data is higher than that of invalid channel data. Therefore, based on the method provided in this disclosure, low-quality parts in the channel data can be effectively filtered out, and the first model can be trained using higher-quality channel data, thereby improving the training effect and performance of the first model.

## Description

### TECHNICAL FIELD

This disclosure relates to the field of communication technology, and in particular to a communication method and a communication device.

### BACKGROUND

Artificial intelligence (AI) in the field of wireless communication requires not only data, but more importantly, clean and high-quality data. Wireless communication systems themselves, especially the physical layer, are the most affected by the external environment. The physical layer data directly collected, such as channel data, often contains a large amount of noise and is of uneven quality. Training or tuning models directly with low-quality channel data may affect the improvement of model performance.

### SUMMARY

This disclosure provides a communication method and a communication device. The following is an introduction to various aspects involved in this disclosure.

In a first aspect, a communication method is provided. The method includes the following. A first communication device determines whether first channel data is valid or invalid, where the first channel data is usable for training a first model when the first channel data is valid, and the first channel data is unusable for training the first model when the first channel data is invalid.

In a second aspect, a communication method is provided. The method includes the following. A second communication device sends first configuration information to a first communication device, where the first configuration information is used to configure a content and/or a parameter of a first condition, first channel data is valid when the first channel data meets the first condition, the first channel data is usable for training a first model when the first channel data is valid, and the first channel data is unusable for training the first model when the first channel data is invalid.

In a third aspect, a communication device is provided. The communication device is a first communication device. The communication device includes a determining unit configured to determine whether first channel data is valid or invalid, where the first channel data is usable for training a first model when the first channel data is valid, and the first channel data is unusable for training the first model when the first channel data is invalid.

In a fourth aspect, a communication device is provided. The communication device is a second communication device. The communication device includes a second sending unit configured to send first configuration information to a first communication device, where the first configuration information is used to configure a content and/or a parameter of a first condition, first channel data is valid when the first channel data meets the first condition, the first channel data is usable for training a first model when the first channel data is valid, and the first channel data is unusable for training the first model when the first channel data is invalid.

In a fifth aspect, a communication device is provided. The communication device includes a memory and a processor, where the memory is configured to store one or more computer programs, and the processor is configured to invoke the computer program in the memory to cause the terminal device to perform some or all of the steps in the methods of the above aspects.

In a sixth aspect, a communication system is provided in embodiments of the present disclosure, which includes the above communication devices. In another possible design, the system may further include other devices that interact with the communication device(s) as provided in the embodiments of the present disclosure.

In a seventh aspect, a computer-readable storage medium is provided in embodiments of the present disclosure. The computer-readable storage medium stores a computer program which causes a communication device to perform the method of

In an eighth aspect, a computer program product is provided in embodiments of the present disclosure. The computer program product includes a non-transitory computer-readable storage medium storing a computer program operable to cause a communication device to perform some or all of the steps in the methods of the various aspects described above. In some implementations, the computer program product can be a software installation package.

In a ninth aspect, a chip is provided in embodiments of the present disclosure. The chip includes a memory and a processor, where the processor can call and run a computer program stored in the memory to implement some or all of the steps described in the methods of the above aspects.

The data used to train the first model is filtered. The first channel data can be used to train the first model only when it is valid. It can be understood that for the training of the first model, the quality of valid channel data is higher than that of invalid channel data. Therefore, based on the method provided in this disclosure, low-quality parts in the channel data can be effectively filtered out, and the first model can be trained using higher-quality channel data, thereby improving the training effect and performance of the first model.

### BRIEF DESCRIPTION OF THE DRAWINGS

FIG. 1 is a schematic diagram of the wireless communication system to which the embodiments of this disclosure are applied.
FIG. 2 is a schematic flowchart of a communication method provided in the embodiments of this disclosure.
FIG. 3A and FIG. 3B are example diagrams illustrating power distribution of different channel data in a delay domain.
FIG. 4 is a schematic flowchart of another communication method provided in the embodiments of this disclosure.
FIG. 5 is a schematic flowchart of another communication method provided in the embodiments of this disclosure.
FIG. 6 is an example diagram of a method for determining whether power distribution of first channel data meets a condition provided in this disclosure.
FIG. 7 is a schematic structural diagram of a communication device provided in the embodiments of this disclosure.
FIG. 8 is a schematic structural diagram of another communication device provided in the embodiments of this disclosure.
FIG. 9 is a schematic structural diagram of an apparatus for communication provided in the embodiments of this disclosure.

### DETAILED DESCRIPTION

The technical solutions in this disclosure will be described below in conjunction with the accompanying drawings.

### Communication system

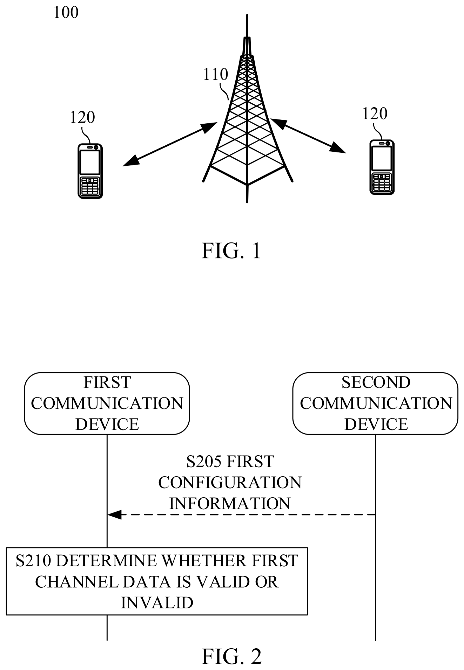

FIG. 1 illustrates a wireless communication system 100 applied in embodiments of the present disclosure. The wireless communication system 100 may include communication devices. The communication device may include, for example, a network device 110 or a terminal device 120. The network device 110 may be a device that communicates with the terminal device 120. The network device 110 may provide communication coverage for a specific geographic area and may communicate with the terminal device 120 located within that coverage area.

FIG. 1 exemplarily illustrates one network device and two terminals. Optionally, the wireless communication system 100 may include multiple network devices, and there may be other numbers of terminal devices within coverage of each network device. The embodiments of the present disclosure are not limited to this.

Optionally, the wireless communication system 100 may also include other network entities such as a network controller and a mobility management entity, which are not limited in the embodiments of the present disclosure.

It should be understood that the technical solution of the embodiments of the present disclosure can be applied to various communication systems, such as the 5th generation (5G) system or new radio (NR), long term evolution (LTE) system, LTE frequency division duplex (FDD) system, LTE time division duplex (TDD), etc. The technical solution provided in this disclosure can also be applied to future communication systems, such as the sixth generation mobile communication system, satellite communication system, and so on.

The terminal device in embodiments of the disclosure can also be referred to as a user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user apparatus. The terminal device in embodiments of the disclosure can refer to a device providing voice and/or data connectivity for a user, and can be used for connecting a human, an object, and a machine, for example, various devices having wireless connection functions such as a handheld device, an in-vehicle device, and the like. The terminal device in embodiments of the disclosure can be a mobile phone, a tablet computer (pad), a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE can act as a base station. For example, the UE can act as a scheduling entity for providing SL signals between UEs in vehicle-to-everything (V2X) or device-to-device (D2D) communication, etc. For example, a cellular radio telephone and an automobile communicate with each other by using SL signals. A cellular radio telephone and a smart household appliance communicate with each other without relaying communication signals via a base station.

The network device in embodiments of the disclosure can be a device for communicating with the terminal device. The network device can also be referred to as an access-network device or a radio access network (RAN) device, for example, the network device can be a base station. The network device in embodiments of the disclosure can refer to a RAN node (or device) that enables a terminal device to access a wireless network. The base station can cover various names in a broad sense, or replace the following names, for example, a NodeB or an evolved NodeB (eNB), a next-generation node B (gNB), a relay node, an access point (AP), a transmission and reception point (TRP), a transmission point (TP), a master eNB (MeNB), a secondary eNB (SeNB), a multi-standard radio (MSR) node, a home base station, a network controller, an access node, a radio node, and an AP, a transmission node, a transmission and reception node, a baseband unit (BBU), a remote radio unit (RRU), an active antenna unit (AAU), a remote radio head (RRH), a central unit (CU), a distributed unit (DU), a positioning node, and the like. The base station can be a macro base station, a micro base station, a relay node, a donor node, or the like, or a combination thereof. The base station can also refer to a communication module, a modem, or a chip that is configured in the foregoing device or apparatus. The base station can also be a mobile switching center, a device functioning as a base station in D2D, V2X, and machine-to-machine (M2M) communication, a network-side device in a 6G network, a device functioning as a base station in a future communication system, etc. The base station can support networks of the same or different access technologies. There is no limitation on the specific technology and device form applied to the network device in embodiments of the disclosure.

The base station can be fixed or mobile. For example, a helicopter or unmanned aerial vehicle (UAV) can be configured to act as a mobile base station, and one or more cells can move according to the position of the mobile base station. In other examples, the helicopter or UAV can be configured to function as a device for communicating with another base station.

In some deployments, the network device in embodiments of the disclosure can refer to a CU or a DU, or the network device includes a CU and a DU. The gNB can also include an AAU.

The network device and the terminal device can be deployed on land, which includes indoor or outdoor, handheld, wearable, or in-vehicle. The network device and the terminal device can also be deployed on water. The network device and the terminal device can also be deployed on airplanes, balloons, satellites, etc. in the air. In embodiments of the disclosure, there is no limitation on the scenario in which the network device and the terminal device are located.

It should be understood that all or part of the functions of the communication device in this disclosure can also be implemented through software functions running on hardware, or through virtualization functions instantiated on a platform (such as cloud platform).

### Artificial intelligence (AI)

In recent years, artificial intelligence (AI) technology has been sparking a technological revolution in human society. As an important research direction of AI technology, deep learning technology, leveraging the powerful nonlinear fitting capability of deep artificial neural network models, has successfully solved a series of problems that were previously difficult to handle. Particularly in the fields of computer vision and natural language processing, deep learning technology has been successfully applied and even demonstrated performance superior to that of humans. However, unlike traditional technical solutions in the engineering field that mainly rely on algorithms, AI technology is highly dependent on data. Issues such as whether there is sufficient data and the quality of the data will greatly affect the final performance of AI algorithms. For example, the concept of convolutional neural networks was proposed in the 1980s and 1990s, but it did not attract much attention for a long time afterwards. It was not until 2012, relying on the large-scale image dataset ImageNet, that convolutional neural networks achieved remarkable breakthroughs in the field of image recognition. Nowadays, in any field where AI technology is applied, acquisition and construction of large-scale, high-quality datasets are extremely critical issues. It can be said that data is the source of AI. The more data there is and the higher its quality, the greater the potential of AI.

Data cleaning can normalize the collected raw data to improve data quality, thereby enhancing the training effect of AI models. Specifically, the most basic logic of data cleaning is to identify and process abnormal samples from the raw data, such as by deletion or replacement. For example, in the field of computer vision, abnormal data can be identified and cleaned through subjective judgment by the human eye or based on some objective evaluation indicators of image quality. Objective evaluation indicators may include, for example, the blurriness, brightness, and color difference of the image. Similarly to the field of computer vision, in the field of natural language, abnormal data can be screened and identified based on subjective judgment or objective rules such as grammar and format.

### Wireless communication system based on AI technology

Future wireless communication systems will evolve towards higher throughput, lower latency, higher reliability, greater numbers of connections, and higher spectral efficiency. Recent research has shown that AI technology has significant potential for application in many areas, such as complex environment modeling and learning, and complex signal processing and prediction. It is expected to promote the evolution and transformation of future communication paradigms, thus driving the rapid development of wireless AI technology. For example, in the R18 (Release 18) standardization of the 3rd Generation Partnership Project (3GPP), a study item has been established specifically for research and discussion on the introduction of AI technology into the physical layer of wireless communication systems. The research mainly focuses on use cases such as channel state information (CSI) feedback, beam management, and high-precision positioning. Similar to other fields where AI technology is applied, the quantity and quality of datasets are key factors affecting the performance of AI in the field of wireless communication. Undoubtedly, wireless communication systems themselves contain a large amount of data. Millions of system devices, billions of mobile terminals, and tens of billions of future Internet of Things terminals are generating a huge amount of data every moment. Using these data directly for model training will cause many problems.

The quality of physical layer data collected is affected by the wireless environment in which a data collection device is located. Taking the physical layer data collected directly by terminal devices as an example, the quality of these physical layer data is greatly influenced by the wireless environment in which the terminal devices are located. For example, for some terminal devices with very poor channel quality, the data they collect may contain a large amount of noise. Training or tuning models directly with data containing a large amount of noise may affect the improvement of model performance.

It can be seen that AI technology in the field of wireless communication needs not only data, but more importantly, clean and high-quality data. Wireless communication systems themselves, especially at the physical layer, are the most affected by the external environment. The physical layer data collected directly, such as wireless channel data (also known as channel data or channel samples), often contain a large amount of noise and are of uneven quality.

Wireless channel data implicitly contains rich environmental information, and thus is used in solving many physical layer problems in wireless communication using AI. For example, potential AI use cases such as CSI feedback, channel estimation, and positioning may all use channel data in the model training process. For downlink channel measurement, a network device needs to configure and send a reference signal (RS), which is then detected by a terminal device to complete channel measurement and obtain wireless channel data. However, in the channel data measured by the terminal device, there may be some poor-quality channel data due to reasons such as measurement location, angle, and poor RS detection. Since the form of channel data is highly variable and disordered, these poor-quality channel data do not have explicit physical significance.

FIG. 2 is a schematic flowchart of a communication method provided in the embodiments of this disclosure, which is used to solve the above-mentioned problems. The method illustrated in FIG. 2 may include operations at S210.

At block S210, a first communication device determines whether first channel data is valid or invalid.

The first communication device may obtain one or more channel data, and the first channel data may be any one of the one or more channel data. In some embodiments, the first channel data may also be referred to as a first channel sample.

When the first channel data is valid, the first channel data can be used to train a first model. When the first channel data is invalid, the first channel data cannot be used to train the first model. It can be understood that if the first channel data is determined to be valid, the first channel data may be high-quality channel data; if the first channel data is determined to be invalid, the first channel data may be low-quality channel data. In other words, based on the operation at S210, the first communication device can perform data cleaning on the first channel data.

Data used to train the first model is filtered data. The first channel data can be used to train the first model only when the first channel data is valid. It can be understood that for the training of the first model, the quality of valid channel data is higher than that of invalid channel data. Therefore, based on the method provided in this disclosure, low-quality parts in the channel data can be effectively filtered out, and the first model can be trained using higher-quality channel data, thereby improving the training effect and performance of the first model.

In some embodiments, the first communication device may receive first indication information. The first indication information may be used to indicate whether the first communication device should determine whether the first channel data is valid or invalid. In other words, the first indication information may be used to indicate whether the first communication device should perform the operation at S210. For example, the first indication information may include an indication of "yes/no" or "on/off". If the operation at S210 is not to be performed, the first indication information may indicate "off" or "no", and the first communication device will not determine whether the first channel data is valid or invalid. If the operation at S210 is to be performed, the first indication information may indicate "on" or "yes", and the first communication device will not determine whether the first channel data is valid or invalid.

As mentioned above, in the operation at S210, actually data cleaning is performed on the first channel data. Therefore, in some embodiments, the first indication information may also be referred to as data cleaning indication information.

The first indication information may be sent by a second communication device. The second communication device may be, for example, a network device. The second communication device may determine, based on usage of the first channel data and/or specific requirements, whether to require the first communication device to perform data cleaning, thereby flexibly controlling data cleaning at the first communication device. In some embodiments, the first indication information may be included in first configuration information.

Unlike the fields of computer vision and natural language processing, wireless physical layer data is difficult to identify anomalies through subjective judgment. In addition, there are no mature and standardized objective criteria to determine whether the data is valid. This disclosure proposes that the validity of the first channel data can be determined based on a first condition.

In some embodiments, the first channel data may be considered valid if the first channel data meets the first condition. The first condition may be related to one or more of the following: a first metric, power distribution of the first channel data.

The first metric may be determined based on an RS corresponding to the first channel data. The RS corresponding to the first channel data may be the RS used to measure the first channel data. Through the RS, the first communication device can measure the first channel data and calculate the first metric.

For example, the first metric may be one or more of the following: Reference Signal Received Power (RSRP), Reference Signal Receiving Quality (RSRQ), or Received Signal Strength Indicator (RSSI).

The first metric can reflect a channel condition and/or a reception effect of the reference signal. For example, the higher the first metric, the better the channel condition and/or the reception effect of the reference signal.

In some embodiments, if the first metric is greater than or equal to a threshold of the first metric, the first channel data may be determined to be valid, that is, the first condition may include the first metric being greater than or equal to the threshold of the first metric. In other words, when the channel condition is well and/or the reception effect of the reference signal is satisfactory, the first channel data may be valid. In this case, the measured first channel data may be suitable for training the first model.

In some embodiments, if the first metric is less than or equal to a threshold of the first metric, the first channel data may be determined to be invalid. In other words, when the channel condition is poor and/or the reception effect of the reference signal is unsatisfactory, the measured first channel data may be drowned in noise and may not be suitable for training the first model.

This disclosure does not limit the specific value of the threshold of the first metric. For example, the threshold of the first metric may be -80dBm, -70dBm, or -60dBm, etc.

Power distribution of the first channel data can be used to reflect energy distribution of the first channel data in different signal transmission paths. For example, the power distribution may be distribution of power in a delay domain. In some embodiments, the delay domain may also be referred to as the time domain.

In some embodiments, the first channel data may be in a frequency dimension, and the first channel data can be transformed from the frequency domain to the delay domain. For example, the first channel data can be transformed to the delay domain through an inverse fast Fourier transform (IFFT).

For a simple transmission environment, such as with a line-of-sight (LOS) transmission path, the power distribution will be more concentrated. For a complex transmission environment, such as with only non-line-of-sight (NLOS) transmission paths, the power distribution will be relatively dispersed. The first condition may include the power distribution of the first channel data being concentrated. That is to say, when the power distribution or energy distribution of the first channel data is concentrated, the first channel data can be considered valid.

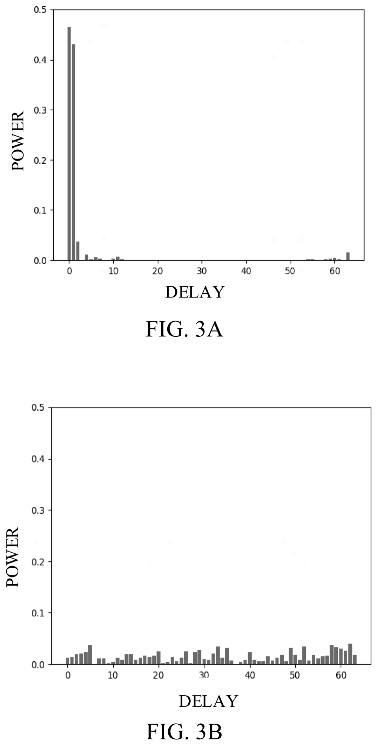

FIG. 3A and FIG. 3B are example diagrams illustrating power distribution of different channel data in the delay domain. The power distribution illustrated in FIG. 3A is concentrated and shows clear patterns, indicating that the channel data can clearly reflect channel characteristics. The power distribution illustrated in FIG. 3B is chaotic and reflects that the channel data is heavily affected by noise and is of poor quality.

When the power distribution of the first channel data is concentrated, the first channel data conforms to a basic distribution pattern and can be used to train the first model. When the power distribution of the first channel data is too dispersed, the first channel data lacks a basic distribution pattern and may be an invalid channel measurement data, which thus cannot be used to train the first model. The following is an example of how to determine whether the power distribution of the first channel data is concentrated.

In some embodiments, the first channel data may include multiple sampling points. Some of the sampling points in the first channel data may form a first group of sampling points. A power sum of the first group of sampling points may be first power, that is, a sum of power at the sampling points in the first group of sampling points may be the first power. If a proportion of the first power to total power of the first channel data is greater than or equal to a first threshold, it can be determined that the power distribution of the first channel data is concentrated. That is to say, the first condition may include that the proportion of the first power to the total power of the first channel data is greater than or equal to the first threshold. It can be understood that if the proportion of the first power is large, it indicates that the power distribution of the first channel data is concentrated in the first group of sampling points, that is, the power distribution of the first channel data is considered concentrated.

In some embodiments, some of the sampling points in the first channel data may form a second group of sampling points. The sampling points in the second group of sampling points may be different from those in the first group of sampling points. A power sum of the second group of sampling points may be second power, that is, a sum of power at the sampling points in the second group of sampling points may be the second power. If a proportion of the second power to the total power of the first channel data is less than or equal to a second threshold, it can be determined that the power distribution of the first channel data is concentrated. That is to say, the first condition may include that the proportion of the second power to the total power of the first channel data is less than or equal to the second threshold. It can be understood that if the proportion of the second power is small, it indicates that the power distribution of the first channel data is concentrated in sampling points other than the second group of sampling points, that is, the power distribution of the first channel data is considered concentrated.

This disclosure does not limit a specific value of the first threshold or the second threshold. For example, the first threshold or the second threshold may be one of 0.1, 0.2, 0.3, 0.4, 0.5, 0.6, 0.7, 0.8, 0.9, 0.95, 0.99, etc.

As an implementation, power at each of the first group of sampling points may be greater than or equal to power at each of the sampling points in the first channel data other than the first group of sampling points. That is to say, in the delay dimension, if the sampling points in the first channel data are sorted in descending order of power, the first group of sampling points may be the first one or more sampling points of the sorted sampling points in the first channel data.

The number of sampling points in the first group of sampling points in the delay dimension may satisfy that: the number is M or a proportion of the first group of sampling points to all sampling points in the first channel data is N. Both M and N may be numbers greater than 0. For example, if the sampling points in the first channel data are sorted in descending order of power, the first group of sampling points may be the first M sampling points or the first N proportion of sampling points of the sorted sampling points in the sorted first channel data.

As an implementation, power at each of the second group of sampling points may be less than or equal to power at sampling points in the first channel data other than the second group of sampling points. That is to say, in the delay dimension, if the sampling points in the first channel data are sorted in descending order of power, the second group of sampling points may be the last one or more sampling points of the sorted sampling points in the first channel data.

The number of sampling points in the second group of sampling points in the delay dimension may satisfy that: the number is P or a proportion of the second group of sampling points to all sampling points in the first channel data is Q. Both P and Q may be numbers greater than 0. For example, if the sampling points in the first channel data are sorted in descending order of power, the second group of sampling points may be the last P sampling points or the last Q proportion of sampling points of the sorted sampling points in the first channel data.

This disclosure does not limit a specific value of M, N, P, or Q. For example, the value of M or P may be one of 32, 64, 96, 128, 160, etc. For example, the value of N or Q may be one of 0.1, 0.2, 0.3, 0.4, 0.5, 0.6, 0.7, 0.8, 0.9, 0.95, 0.99, etc.

This disclosure does not limit the manners of obtaining the first group of sampling points and the second group of sampling points. For example, in the delay dimension, the sampling points in the first channel data may be sorted according to power levels to determine the first group of sampling points and/or the second group of sampling points. The sorting order may be, for example, the descending order mentioned above or an ascending order. The manner of determining the first group of sampling points and/or the second group of sampling points according to the ascending order is similar to that according to the descending order, which will not be repeated herein.

It should be noted that in the delay dimension, sampling points may also be referred to as delay sampling points.

In some embodiments, the method in FIG. 2 may also include operations at S205.

At block S205, the first communication device may receive first configuration information.

The first configuration information may be used to configure content and/or a parameter of the first condition. In other words, the first configuration information may be used to configure a condition and/or a metric related to data cleaning.

The content of the first condition may include the information related to the first condition mentioned above. As an implementation, the first configuration information may be used to configure the first condition to be related to the first metric and/or the power distribution of the first channel data. For example, the content of the first condition may include that: the first metric is greater than or equal to the threshold of the first metric; and/or, the power distribution of the first channel data is concentrated.

The parameter of the first condition may include any one or more of the parameters related to the first condition mentioned above. For example, the parameter of the first condition may include one or more of: the threshold of the first metric, the first threshold, the second threshold, M, N, P, Q, etc. As an implementation, the first configuration information may be used to indicate that the first condition is related to the first metric, and to configure which specific first metric the first condition is related to. In addition, the first configuration information may also be used to configure the threshold value of the first metric.

The first configuration information may be sent by the second communication device mentioned above. In other words, the content and/or parameter of the first condition may be configured by the second communication device. The second communication device may flexibly control the degree of data cleaning based on the usage of the first channel data and actual requirements.

The first configuration information may be carried in one or more of the following messages: Radio Resource Control (RRC) message, broadcast message, Medium Access Control (MAC) Control Element (CE), Downlink Control Information (DCI), etc.

This disclosure does not limit an operation that the first communication device may perform on the first channel data after data cleaning.

As an implementation, when the first channel data is valid, the first communication device may send the first channel data. A recipient of the first channel data may train the first model based on the first channel data. When the first channel data is invalid, the first communication device may not send the first channel data. In this case, the first communication device may not need to upload invalid channel data, thereby avoiding the waste of uplink transmission resources.

This disclosure does not limit the message that carries the first channel data. For example, the first channel data may be carried through RRC signaling and/or Physical Uplink Shared Channel (PUSCH).

As an implementation, when the first channel data is valid, the first communication device may train the first model based on the first channel data. In some cases, for example, when the first communication device is a terminal device, the training of the first model by the first communication device may be fine-tuning of the first model. When the first channel data is invalid, the first communication device may not train the first model based on the first channel data. Training the first model locally based on valid first channel data can effectively improve the performance of the first model, thereby avoiding the adverse effects of invalid data on the performance of the first model.

It should be noted that this disclosure does not limit the processing of the first channel data when the first channel data is invalid. For example, the first communication device may discard or delete the invalid first channel data, that is, not use the first channel data to perform the operations that would be performed if the first channel data were valid. Alternatively, the first communication device may replace the invalid first channel data. Alternatively, the first communication device may process the invalid first channel data so that the processed first channel data meets the first condition.

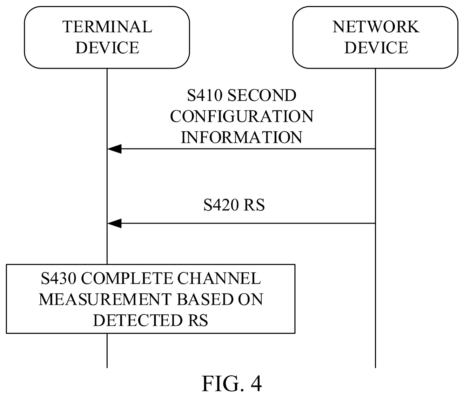

The first channel data may be obtained by the first communication device. That is, the first communication device may perform data collection to obtain the first channel data. In some embodiments, the second communication device may send second configuration information to the first communication device, and the second configuration information may be used to indicate to the first communication device to perform channel measurement. For example, the second configuration information may be used to configure an RS. Based on the RS, the first communication device may perform the channel measurement to collect the first channel data. FIG. 4 illustrates the process of collecting the first channel data, in which the first communication device is a terminal device and the second communication device is a network device.

The method illustrated in FIG. 4 may include operations at S410 and S420.

At block S410, the terminal device receives second configuration information. Correspondingly, the network device sends the second configuration information.

The second configuration information may be used to configure an RS. The network device configures the RS through the second configuration information for the terminal device to collect first channel data.

At block S420, the terminal device receives the RS. Correspondingly, the network device sends the RS.

The network device may send the RS according to the second configuration information. The terminal device may receive or detect the RS according to the second configuration information.

At block S430, the terminal device completes channel measurement based on the detected RS. Based on the channel measurement at block S430, the terminal device may collect the first channel data.

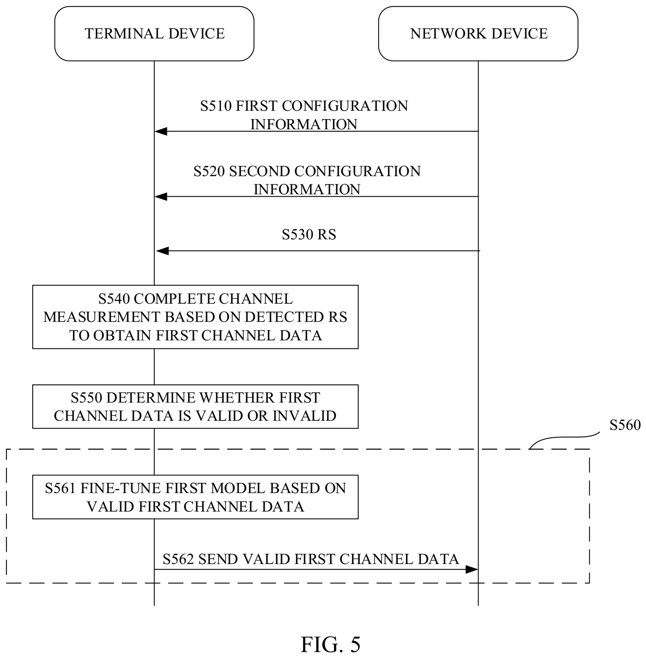

For ease of understanding, the communication method provided by the embodiments of this disclosure is illustrated in FIG. 5. The first communication device may be a terminal device in FIG. 5, and the second communication device may be a network device in FIG. 5. The method illustrated in FIG. 5 may include operations at block S510 to S560.

At block S510, the terminal device receives first configuration information sent by the network device.

The first configuration information may be used to configure content and/or a parameter of a first condition. The first condition is related to data cleaning. In other words, the first configuration information may be used to configure the condition and/or a metric related to data cleaning.

The first configuration information may include data cleaning indication information. The data cleaning indication information indicates whether the terminal device should perform data cleaning.

At block S520, the terminal device receives second configuration information sent by the network device. The second configuration information may be used to configure an RS.

At block S530, the network device sends the RS according to the second configuration. The RS is for the terminal device to complete collection and cleaning of first channel data.

At block S540, the terminal device completes channel measurement based on the detected RS, thereby collecting the first channel data.

The terminal device may determine whether to perform data cleaning according to the data cleaning indication information. If data cleaning is not required, the terminal device may directly send the first channel data to the network device and/or use the first channel data to fine-tune the first model. If data cleaning is required, then for each channel data or sample, the terminal device may determine whether the channel data or sample is valid or invalid according to the first condition indicated by the network device. For channel data that meets the first condition, it may be determined that the channel data is valid; for channel data that does not meet the first condition, it may be determined that the channel data is invalid.

The first condition may include one or more of the following conditions: the first metric is greater than or equal to the threshold of the first metric; the power distribution of the first channel data meets a condition. The first configuration information may configure one or more of the above conditions to be the first condition and the corresponding threshold value(s).

The first metric may include one or more of RSRP, RSRQ, or RSSI. When the channel condition is too poor or the RS reception effect is not good, the measured first channel data may be drowned in noise and not suitable for training the first model. The network device may specify a specific threshold value X for the first metric in the first configuration information. X may be, for example, -80dBm, -70dBm, or -60dBm, etc. When the first metric corresponding to the first channel data is greater than or equal to X, it may be determined that the first channel data is valid. When the first metric corresponding to the first channel data is less than or equal to X, the first channel data may be discarded.

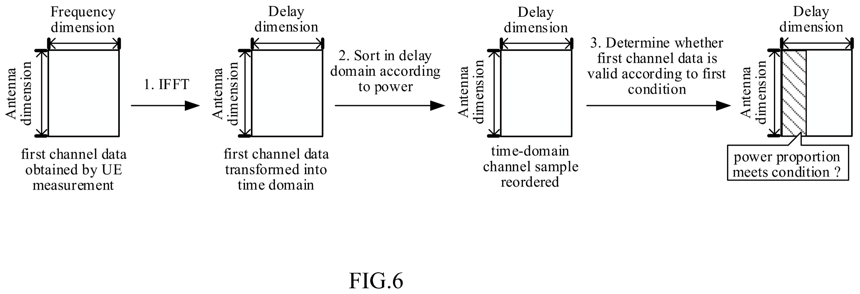

FIG. 6 exemplarily illustrates steps for determining whether the power distribution of the first channel data meets the condition.

Step 1: Transform the first channel data from the frequency domain to the delay domain through IFFT. No strict constraints are imposed on whether additional mathematical processing is performed for the antenna dimension.

Step 2: Reorder the samples within the first channel data in the delay domain according to their energy levels. The following takes the descending order as an example for illustration. It should be understood that an ascending order can also be used, and the first condition can be correspondingly adjusted, which will not be further described in this disclosure.

Step 3: For the reordered first channel data, determine whether the first channel data is valid in accordance with the content and the metric parameter of the first condition configured in the first configuration information. For example, the content of the first condition may include one or more of conditions one to four. Conditions one to four are all related to the power proportion of some sampling points in the first channel data.

Condition one: In the delay dimension, a proportion of a sum of the power at the first N part of sampling points in the first channel data to the total power of the sample is greater than a first threshold Y. Both N and Y can be configured by the network device. N and Y are used to indicate proportions. The value of N or Y can be one of 0.1, 0.2, 0.3, 0.4, 0.5, 0.6, 0.7, 0.8, 0.9, 0.95, or 0.99.

Condition two: In the delay dimension, a proportion of a sum of the power at the first M sampling points in the first channel data to the total power of the first channel data is greater than the first threshold Y. Both M and Y can be configured by the network device. M is used to indicate the number of sampling points. The value of M can be one of 32, 64, 96, 128, or 160. Y is used to indicate the proportion. The value of Y can be one of 0.1, 0.2, 0.3, 0.4, 0.5, 0.6, 0.7, 0.8, 0.9, 0.95, or 0.99.

Condition three: In the delay dimension, a proportion of a sum of the power at the last Q part of sampling points in the first channel data to the total power of the first channel data is less than a second threshold Z. Both Q and Z can be configured by the network device. Q and Z are used to indicate proportions. The value of Q or Z can be one of 0.1, 0.2, 0.3, 0.4, 0.5, 0.6, 0.7, 0.8, 0.9, 0.95, or 0.99.

Condition four: In the delay dimension, a proportion of a sum of the power at the last P sampling points of the first channel data to the total energy of the first channel data is less than the second threshold Z. Both P and Z can be configured by the network device. P is used to indicate the number of sampling points. The value of P can be one of 32, 64, 96, 128, or 160. Z is used to indicate the proportion. The value of Z can be one of 0.1, 0.2, 0.3, 0.4, 0.5, 0.6, 0.7, 0.8, 0.9, 0.95, or 0.99.

Based on a determination that the first channel data is valid, the method illustrated in FIG. 5 may include step S560.

Step S560 may include step S561 and/or step S562.

Step S561: The terminal device fine-tunes the first model based on the valid first channel data.

Step S562: The terminal device sends the valid first channel data to the network device. For example, the first channel data can be carried through RRC signaling or PUSCH.

It should be noted that the first model mentioned in this disclosure may be a model for communication. For example, the first model may include one or more of a channel state information feedback model, a beam management model, and a high-precision positioning model. In some embodiments, the first model may be an AI model. For example, the first model may include a machine learning model. Alternatively, the first model may include a neural network model.

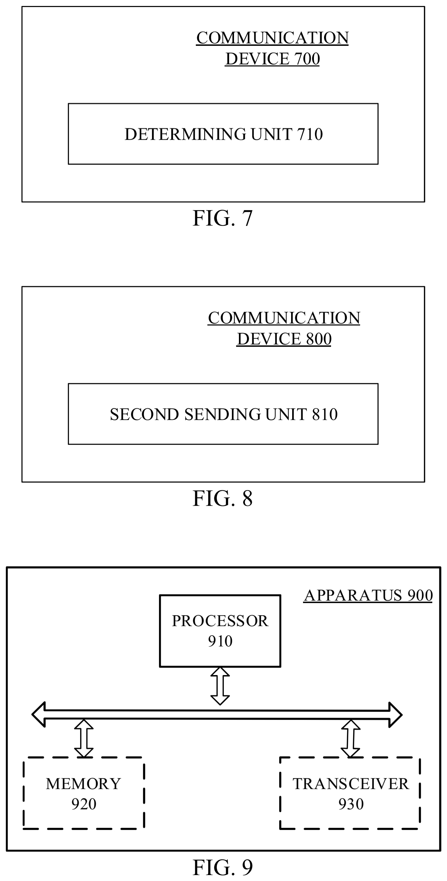

The method embodiments of the present disclosure are described in detail above with reference to FIGS. 1 to 6. In the following, device embodiments of the present disclosure are described in detail with reference to FIGS. 7 to 9. It should be understood that the description of the method embodiments corresponds to the description of the device embodiments, and therefore, the parts not described in detail can refer to the previous method embodiments.

FIG. 7 is a schematic structural diagram of a communication device 700 provided in embodiments of the disclosure. The communication device 700 is a first communication device. The communication device 700 includes a determining unit 710.

The determining unit 710 is configured to determine whether first channel data is valid or invalid. The first channel data can be used for training a first model when the first channel data is valid, and the first channel data cannot be used for training the first model when the first channel data is invalid.

In some embodiments, the first channel data is valid when the first channel data meets a first condition. The first condition is related to one or more of: a first metric determined based on a reference signal corresponding to the first channel data; or a power distribution of the first channel data.

In some embodiments, the first metric includes one or more of RSRP, RSRQ, or RSSI.

In some embodiments, the power distribution is a distribution of power in a delay domain.

In some embodiments, when the first condition is related to the power distribution, the first condition includes one or more of: a proportion of first power to total power of the first channel data being greater than or equal to a first threshold; or a proportion of second power to the total power of the first channel data being less than or equal to a second threshold, where the first power is a sum of power at a first group of sampling points in the first channel data, and the second power is a sum of power at a second group of sampling points in the first channel data.

In some embodiments, power at each of the first group of sampling points is greater than or equal to power at each sampling point in the first channel data other than the first group of sampling points, and a number of the first group of sampling points in a delay dimension satisfies that: the number is M; or a proportion of the number to a total number of sampling points in the first channel data is N. Power at each of the second group of sampling points is less than or equal to power at each sampling point in the first channel data other than the second group of sampling points, and a number of the second group of sampling points in the delay dimension satisfies that: the number is P; or a proportion of the number to the total number of sampling points in the first channel data is Q.

In some embodiments, the communication device 700 further includes a first receiving unit configured to receive first configuration information, where the first configuration information is used to configure a content and/or a parameter of the first condition.

In some embodiments, when the first channel data is valid, the communication device 700 further includes: a first sending unit configured to send the first channel data; and/or a training unit configured to train the first model based on the first channel data.

In some embodiments, the communication device 700 further includes a second receiving unit configured to receive first indication information, where the first indication information indicates to the first communication device whether to determine whether the first channel data is valid or invalid.

In some embodiments, the first model is an AI model.

FIG. 8 is a schematic structural diagram of a communication device 800 provided in embodiments of the disclosure. The communication device 800 is a second communication device. The communication device 800 includes a second sending unit 810.

The second sending unit 810 is configured to send first configuration information to a first communication device, where the first configuration information is used to configure a content and/or a parameter of a first condition. First channel data is valid when the first channel data meets the first condition. The first channel data is usable for training a first model when the first channel data is valid, and the first channel data is unusable for training the first model when the first channel data is invalid.

In some embodiments, the first condition is related to one or more of: a first metric determined based on a reference signal corresponding to the first channel data; or a power distribution of the first channel data.

In some embodiments, the first metric includes one or more of RSRP, RSRQ, or RSSI.

In some embodiments, the power distribution is a distribution of power in a delay domain.

In some embodiments, when the first condition is related to the power distribution, the first condition includes one or more of: a proportion of first power to total power of the first channel data being greater than or equal to a first threshold; or a proportion of second power to the total power of the first channel data being less than or equal to a second threshold, where the first power is a sum of power at a first group of sampling points in the first channel data, and the second power is a sum of power at a second group of sampling points in the first channel data.

In some embodiments, power at each of the first group of sampling points is greater than or equal to power at each sampling point in the first channel data other than the first group of sampling points, and a number of the first group of sampling points in a delay dimension satisfies that: the number is M; or a proportion of the number to a total number of sampling points in the first channel data is N. Power at each of the second group of sampling points is less than or equal to power at each sampling point in the first channel data other than the second group of sampling points, and a number of the second group of sampling points in the delay dimension satisfies that: the number is P; or a proportion of the number to the total number of sampling points in the first channel data is Q.

In some embodiments, when the first channel data is valid, the communication device 800 further includes a third receiving unit configured to receive the first channel data.

In some embodiments, the communication device 800 further includes a third sending unit configured to send first indication information to the first communication device, where the first indication information indicates to the first communication device whether to determine whether the first channel data is valid or invalid.

In some embodiments, the first model is an AI model.

In an optional embodiment, the second sending unit 810 may be a transceiver 930, and the determining unit 720 may be a processor 910. The communication device 700 or communication device 800 may also include a memory 920, as illustrated in FIG. 9.

FIG. 9 is a schematic structural diagram of an apparatus for communication according to embodiments of the disclosure. A dashed line in FIG. 9 indicates that the unit or module is optional. The apparatus 900 may be configured to implement the method described in the method embodiments above. The apparatus 900 can be a chip, a terminal device, or a network device.

The apparatus 900 can include one or more processors 910. The processors 910 can support the apparatus 900 to implement methods described in the foregoing method embodiments. The processor 910 can be a general-purpose processor or a dedicated processor. For example, the processor can be a central processing unit (CPU). Alternatively, the processor can also be other general-purpose processors, a digital signal processor (DSP), an application specific integrated circuit (ASIC), a field programmable gate array (FPGA), or other programmable logic devices, discrete gates or transistor logic devices, discrete hardware components. The general-purpose processor can be a microprocessor, or the processor can be any conventional processor.

The apparatus 900 can further include one or more memories 920. The memory 920 is configured to store programs. The programs can be executed by the processor 910, to cause the processor 910 to perform the method described in the foregoing method embodiments. The memory 920can be separate from or integrated into the processor 910.

The apparatus 900 can further include a transceiver 930. The processor 910 can communicate with other devices or chips via the transceiver 930. For example, the processor 910 can perform data transmission and reception with other devices or chips via the transceiver 930.

Embodiments of the disclosure further provide a computer-readable storage medium. The computer-readable storage medium is configured to store programs. The computer-readable storage medium can be applied to the terminal or the network device provided in embodiments of the disclosure, and the programs are operable with a computer to implement methods performed by the terminal or the network device in various embodiments of the disclosure.

Embodiments of the disclosure further provide a computer program product. The computer program product includes programs. The computer program product can be applied to the terminal or the network device provided in embodiments of the disclosure, and the programs are operable with a computer to implement methods performed by the terminal or the network device in various embodiments of the disclosure.

Embodiments of the disclosure further provide a computer program. The computer program can be applied to the terminal or the network device provided in embodiments of the disclosure, and the computer program is operable with a computer to implement methods performed by the terminal or the network device in various embodiments of the disclosure.

It should also be understood that, the terms "system" and "network" herein can be used interchangeably throughout the disclosure. In addition, the terms used in the disclosure are only used to explain embodiments of the disclosure, and are not intended to limit the disclosure. The terms "first", "second", "third", and "fourth", etc. in the specification and claims of the disclosure and in the drawings are used for distinguishing different objects rather than describing a particular order. Furthermore, the terms "including", "comprising", "having", and any variations thereof are intended to cover a non-exclusive inclusion.

In embodiments of the disclosure, "indication" referred to in embodiments of the disclosure can be a direct indication, can be an indirect indication, or can mean that there is an association. For example, *A* indicates *B* may can that *A* directly indicates *B,* for instance, *B* can be obtained according to *A*; can mean that *A* indirectly indicates *B,* for instance, *A* indicates C, and *B* can be obtained according to C; or can mean that that there is an association between *A* and*B*.

In embodiments of the disclosure, "*B* corresponding to *A*" indicates that *B* is associated with *A,* and *B* can be determined according to *A.* However, it should be further understood that, "determine *B* according to *A*" does not mean that *B* is determined according to *A* only, and *B* can also be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-storing a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" can refer to a communication standard protocol, which can include, for example, an LTE protocol, an NR protocol, and a protocol applied to a future communication system, and the disclosure is not limited in this regard.

The term "and/or" in embodiments of the disclosure only describes an association between associated objects, which means that there can be three relationships. For example, A and/or B can mean A alone, both A and B exist, and B alone. In addition, the character "/" herein generally indicates that the associated objects are in an "or" relationship.

In various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be appreciated that the systems, apparatuses, and methods disclosed in embodiments of the disclosure can also be implemented in various other manners. For example, the above apparatus embodiments are merely illustrative, e.g., the division of units is only a division of logical functions, and other manners of division can be available in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
determining, by a first communication device, whether first channel data is valid or invalid, wherein
the first channel data is usable for training a first model when the first channel data is valid, and the first channel data is unusable for training the first model when the first channel data is invalid.

2. The method according to claim 1, wherein the first channel data is valid when the first channel data meets a first condition, and the first condition is related to one or more of:
a first metric determined based on a reference signal corresponding to the first channel data; or
a power distribution of the first channel data.

3. The method according to claim 2, wherein the first metric comprises one or more of:
reference signal received power (RSRP), reference signal received quality (RSRQ), or received signal strength indicator (RSSI).

4. The method according to claim 2 or 3, wherein the power distribution is a distribution of power in a delay domain.

5. The method according to any one of claims 2 to 4, wherein when the first condition is related to the power distribution, the first condition comprises one or more of:
a proportion of first power to total power of the first channel data being greater than or equal to a first threshold; or
a proportion of second power to the total power of the first channel data being less than or equal to a second threshold,
wherein the first power is a sum of power at a first group of sampling points in the first channel data, and the second power is a sum of power at a second group of sampling points in the first channel data.

6. The method according to claim 5, wherein
power at each of the first group of sampling points is greater than or equal to power at each sampling point in the first channel data other than the first group of sampling points, and a number of the first group of sampling points in a delay dimension satisfies that:
the number is M; or
a proportion of the number to a total number of sampling points in the first channel data is N; and
power at each of the second group of sampling points is less than or equal to power at each sampling point in the first channel data other than the second group of sampling points, and a number of the second group of sampling points in the delay dimension satisfies that:
the number is P; or
a proportion of the number to the total number of sampling points in the first channel data is Q.

7. The method according to any one of claims 2 to 6, further comprising:
receiving, by the first communication device, first configuration information, wherein
the first configuration information is used to configure a content and/or a parameter of the first condition.

8. The method according to any one of claims 1 to 7, wherein when the first channel data is valid, the method further comprises:
sending, by the first communication device, the first channel data; and/or
training, by the first communication device, the first model based on the first channel data.

9. The method according to any one of claims 1 to 8, further comprising:
receiving, by the first communication device, first indication information, wherein the first indication information indicates to the first communication device whether to determine whether the first channel data is valid or invalid.

10. The method according to any one of claims 1 to 9, wherein the first model is an artificial intelligence (AI) model.

11. A communication method, comprising:
sending, by a second communication device, first configuration information to a first communication device, wherein
the first configuration information is used to configure a content and/or a parameter of a first condition, first channel data is valid when the first channel data meets the first condition, the first channel data is usable for training a first model when the first channel data is valid, and the first channel data is unusable for training the first model when the first channel data is invalid.

12. The method according to claim 11, wherein the first condition is related to one or more of:
a first metric determined based on a reference signal corresponding to the first channel data; or
a power distribution of the first channel data.

13. The method according to claim 12, wherein the first metric comprises one or more of:
reference signal received power (RSRP), reference signal received quality (RSRQ), or received signal strength indicator (RSSI).

14. The method according to claim 12 or 13, wherein the power distribution is a distribution of power in a delay domain.

15. The method according to any one of claims 12 to 14, wherein when the first condition is related to the power distribution, the first condition comprises one or more of:
a proportion of first power to total power of the first channel data being greater than or equal to a first threshold; or
a proportion of second power to the total power of the first channel data being less than or equal to a second threshold,
wherein the first power is a sum of power at a first group of sampling points in the first channel data, and the second power is a sum of power at a second group of sampling points in the first channel data.

16. The method according to claim 15, wherein
power at each of the first group of sampling points is greater than or equal to power at each sampling point in the first channel data other than the first group of sampling points, and a number of the first group of sampling points in a delay dimension satisfies that:
the number is M; or
a proportion of the number to a total number of sampling points in the first channel data is N; and
power at each of the second group of sampling points is less than or equal to power at each sampling point in the first channel data other than the second group of sampling points, and a number of the second group of sampling points in the delay dimension satisfies that:
the number is P; or
a proportion of the number to the total number of sampling points in the first channel data is Q.

17. The method according to any one of claims 11 to 16, wherein when the first channel data is valid, the method further comprises:
receiving, by the second communication device, the first channel data.

18. The method according to any one of claims 11 to 17, further comprising:
sending, by the second communication device, first indication information to the first communication device, where the first indication information indicates to the first communication device whether to determine whether the first channel data is valid or invalid.

19. The method according to any one of claims 11 to 18, wherein the first model is an artificial intelligence (AI) model.

20. A communication device, being a first communication device and comprising:
a determining unit configured to determine whether first channel data is valid or invalid, wherein
the first channel data is usable for training a first model when the first channel data is valid, and the first channel data is unusable for training the first model when the first channel data is invalid.

21. The communication device according to claim 20, wherein the first channel data is valid when the first channel data meets a first condition, and the first condition is related to one or more of:
a first metric determined based on a reference signal corresponding to the first channel data; or
a power distribution of the first channel data.

22. The communication device according to claim 21, wherein the first metric comprises one or more of:
reference signal received power (RSRP), reference signal received quality (RSRQ), or received signal strength indicator (RSSI).

23. The communication device according to claim 21 or 22, wherein the power distribution is a distribution of power in a delay domain.

24. The communication device according to any one of claims 21 to 23, wherein when the first condition is related to the power distribution, the first condition comprises one or more of:
a proportion of first power to total power of the first channel data being greater than or equal to a first threshold; or
a proportion of second power to the total power of the first channel data being less than or equal to a second threshold,
wherein the first power is a sum of power at a first group of sampling points in the first channel data, and the second power is a sum of power at a second group of sampling points in the first channel data.

25. The communication device according to claim 24, wherein
power at each of the first group of sampling points is greater than or equal to power at each sampling point in the first channel data other than the first group of sampling points, and a number of the first group of sampling points in a delay dimension satisfies that:
the number is M; or
a proportion of the number to a total number of sampling points in the first channel data is N; and
power at each of the second group of sampling points is less than or equal to power at each sampling point in the first channel data other than the second group of sampling points, and a number of the second group of sampling points in the delay dimension satisfies that:
the number is P; or
a proportion of the number to the total number of sampling points in the first channel data is Q.

26. The communication device according to any one of claims 21 to 25, further comprising:
a first receiving unit configured to receive first configuration information, wherein
the first configuration information is used to configure a content and/or a parameter of the first condition.

27. The communication device according to any one of claims 20 to 26, wherein when the first channel data is valid, the communication device further comprises:
a first sending unit configured to send the first channel data; and/or
a training unit configured to train the first model based on the first channel data.

28. The communication device according to any one of claims 20 to 27, further comprising:
a second receiving unit configured to receive first indication information, wherein the first indication information indicates to the first communication device whether to determine whether the first channel data is valid or invalid.

29. The communication device according to any one of claims 20 to 28, wherein the first model is an artificial intelligence (AI) model.

30. A communication device, being a second communication device and comprising:
a second sending unit configured to send first configuration information to a first communication device, wherein
the first configuration information is used to configure a content and/or a parameter of a first condition, first channel data is valid when the first channel data meets the first condition, the first channel data is usable for training a first model when the first channel data is valid, and the first channel data is unusable for training the first model when the first channel data is invalid.

31. The communication device according to claim 30, wherein the first condition is related to one or more of:
a first metric determined based on a reference signal corresponding to the first channel data; or
a power distribution of the first channel data.

32. The communication device according to claim 31, wherein the first metric includes one or more of:
reference signal received power (RSRP), reference signal received quality (RSRQ), or received signal strength indicator (RSSI).

33. The communication device according to claim 31 or 32, wherein the power distribution is a distribution of power in a delay domain.

34. The communication device according to any one of claims 31 to 33, wherein when the first condition is related to the power distribution, the first condition comprises one or more of:
a proportion of first power to total power of the first channel data being greater than or equal to a first threshold; or
a proportion of second power to the total power of the first channel data being less than or equal to a second threshold,
wherein the first power is a sum of power at a first group of sampling points in the first channel data, and the second power is a sum of power at a second group of sampling points in the first channel data.

35. The communication device according to claim 34, wherein
power at each of the first group of sampling points is greater than or equal to power at each sampling point in the first channel data other than the first group of sampling points, and a number of the first group of sampling points in a delay dimension satisfies that:
the number is M; or
a proportion of the number to a total number of sampling points in the first channel data is N; and
power at each of the second group of sampling points is less than or equal to power at each sampling point in the first channel data other than the second group of sampling points, and a number of the second group of sampling points in the delay dimension satisfies that:
the number is P; or
a proportion of the number to the total number of sampling points in the first channel data is Q.

36. The communication device according to any one of claims 30 to 35, wherein when the first channel data is valid, the communication device further comprises:
a third receiving unit configured to receive the first channel data.

37. The communication device according to any one of claims 30 to 36, further comprising:
a third sending unit configured to send first indication information to the first communication device, wherein the first indication information indicates to the first communication device whether to determine whether the first channel data is valid or invalid.

38. The communication device according to any one of claims 30 to 37, wherein the first model is an artificial intelligence (AI) model.

39. A communication device comprising a memory and a processor, wherein the memory is configured to store a program, and the processor is configured to invoke the program in the memory to cause the communication device to perform the method according to any one of claims 1 to 19.

40. An apparatus, comprising a processor configured to invoke a program from a memory to cause the apparatus to perform the method according to any one of claims 1 to 19.

41. A chip, comprising a processor configured to invoke a program from a memory to cause a device installed with the chip to perform the method according to any one of claims 1 to 19.

42. A computer-readable storage medium storing a program which causes a computer to perform the method according to any one of claims 1 to 19.

43. A computer program product comprising a program which causes a computer to perform the method according to any one of claims 1 to 19.

44. A computer program causing a computer to perform the method according to any one of claims 1 to 19.
